# EUROPÄISCHE PATENTANMELDUNG

(11) **EP 4 368 651 A1**
(43) Veröffentlichungstag der Anmeldung: **15.05.2024**
(21) Anmeldenummer: 22206450.3
(22) Anmeldetag: 09.11.2022
(51) Int. Cl.: C08G 59/56

(54) **HÄRTER FÜR EPOXIDHARZE MIT DIPHENOLSÄURE**

(71) Anmelder: Sika Technology AG, 6340 Baar (CH)
(72) Erfinder: BURCKHARDT, Urs, 8049 Zürich (CH); KASEMI, Edis, 8046 Zürich (CH); KRAMER, Andreas, 8008 Zürich (CH); STADELMANN, Ursula, 8046 Zürich (CH)
(74) Vertreter: Sika Patent Attorneys

(57) **Zusammenfassung**

Gegenstand der Erfindung ist ein Härter für Epoxidharze umfassend mindestens ein bei Raumtemperatur flüssiges Amin **A1** mit 6 bis 15 C-Atomen und zwei primären Aminogruppen, mindestens eine Diphenolsäure der Formel (I) und gegebenenfalls mindestens einen Verdünner.

Der erfindungsgemässe Härter ist sehr einfach herstellbar, niedrigviskos und ermöglicht bei Umgebungstemperaturen anwendbare Beschichtungen mit guter Verarbeitbarkeit, überraschend schneller Aushärtung, hoher Endhärte, qualitativ hochwertiger Oberfläche und überraschend wenig Neigung zum Vergilben.

## Beschreibung

### Technisches Gebiet

Die Erfindung betrifft Härter für Raumtemperatur-härtende Epoxidharz-Zusammensetzungen, insbesondere für Beschichtungen.

### Stand der Technik

Raumtemperatur-härtende Polymerzusammensetzungen auf Epoxidharz-Basis sind im Bauwesen weit verbreitet, beispielsweise als Beschichtungen, Klebstoffe oder Injektionsharze. Sie bestehen aus flüssigen Harz- und Härter-Komponenten, welche vor der Applikation gemischt werden und bei Umgebungstemperaturen zu einem hochfesten und beständigen Material aushärten. Bei kühlen Umgebungsbedingungen, etwa im Temperaturbereich von 15 bis gegen 0 °C, härten solche Systeme aber oft nur langsam aus und neigen zu Oberflächenstörungen wie Trübungen, Flecken, Rauheit oder Klebrigkeit, was auch als "Blushing" bezeichnet wird und insbesondere bei erhöhter Luftfeuchtigkeit auftritt. Vor allem in Beschichtungsanwendungen, wo eine hohe Oberflächenqualität und Härte entscheidend ist, sind diese Nachteile sehr unerwünscht und führen oft zu aufwändiger Nacharbeit.

Als Härter für Raumtemperatur-härtende Epoxidharz-Beschichtungen bekannt sind Kombinationen aus primären Diaminen wie insbesondere Isophorondiamin und Salicylsäure, wobei diese typischerweise zusätzlich Benzylalkohol enthalten. Solche Härter sind sehr einfach herstellbar und ermöglichen eine schnelle Aushärtung zu qualitativ hochwertigen Oberflächen, wobei aber auch Nachteile bestehen. Die Schnelligkeit der Aushärtung ist verbesserungsfähig, insbesondere in der Kälte, die erreichten Endhärten sind eher tief und es besteht eine erhebliche Neigung zum Vergilben nach der Aushärtung. Zudem wurde Salicylsäure jüngst als reproduktionstoxisch eingestuft, was ihre Verwendung erschwert.

Diphenolsäure (Diphenolic Acid, DPA, 4,4-Bis(4-hydroxyphenyl)pentansäure) ist ein bei Raumtemperatur festes Bisphenol. Bekannt ist der Einsatz von Diphenolsäure als Härter für hitzehärtende Epoxidharz-Produkte, beispielsweise beschrieben in US 6,562,482. Ausserdem wurde die Verwendung von Diphenolsäure als Ausgangsstoff zur Herstellung von Epoxidharzen beschrieben, beispielsweise in Progress in Polymer Science 108 (2020) 101287.

### Darstellung der Erfindung

Aufgabe der vorliegenden Erfindung ist es, einen Härter für Raumtemperaturhärtbare Epoxidharz-Zusammensetzungen zur Verfügung zu stellen, welcher geeignet ist für bei Umgebungstemperaturen anwendbare Beschichtungen und die Nachteile des Standes der Technik überwindet.

Diese Aufgabe wird mit einem Härter wie in Anspruch 1 beschrieben gelöst. Der Härter enthält ein bei Raumtemperatur flüssiges Amin **A1** mit 6 bis 15 C-Atomen und zwei primären Aminogruppen, eine Diphenolsäure und bevorzugt zusätzlich einen Verdünner wie insbesondere Benzylalkohol. Im Vergleich zu bekannten Härtern mit Salicylsäure ermöglicht der erfindungsgemässe Härter überraschenderweise eine schnellere Aushärtung, höhere Endhärten und überraschend wenig Neigung zum Vergilben. Dabei wirkt die Diphenolsäure als Beschleuniger und vermag auch Blushing zu reduzieren.

Der erfindungsgemässe Härter ist einfach herstellbar, niedrigviskos und ermöglicht Beschichtungen mit guter Verarbeitbarkeit, schneller Aushärtung und hoher Endhärte, mit qualitativ hochwertiger Oberfläche und geringer Neigung zum Vergilben. Weiterhin weist der erfindungsgemässe Härter toxikologische Vorteile auf und ist besonders nachhaltig, insbesondere wenn eine Diphenolsäure eingesetzt wird, welche auf nachwachsenden Rohstoffen basiert.

Der Härter ist besonders geeignet für Epoxidharz-Beschichtungen, welche bei Umgebungstemperaturen verarbeitet werden, wie insbesondere Bodenbeschichtungen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter für Epoxidharze umfassend
- mindestens ein bei Raumtemperatur flüssiges Amin **A1** mit 6 bis 15 C-Atomen und zwei primären Aminogruppen,
- mindestens eine Diphenolsäure der Formel (I), 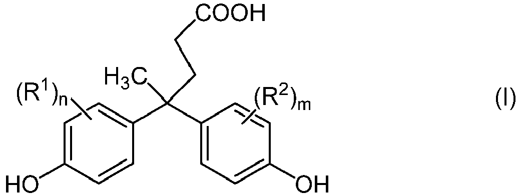 wobei
   m und n unabhängig voneinander für 0, 1 oder 2 stehen, und
   R¹ und R² unabhängig voneinander für einen Alkyl-, Alkenyl oder Alkoxyrest mit 1 bis 10 C-Atomen oder für Hydroxyl oder für einen linearen Kohlenwasserstoffrest mit 15 C-Atomen stehen,
- und gegebenenfalls mindestens einen Verdünner.

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Amingruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet. Es wird angegeben in der Masseinheit "g/eq".

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/eq".

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Topfzeit" wird die maximale Zeitspanne ab dem Mischen der Komponenten und der Applikation einer Epoxidharz-Zusammensetzung bezeichnet, in der die vermischte Zusammensetzung in einem ausreichend fliessfähigen Zustand ist und die Substratoberflächen gut benetzen kann.

Als "Gelierzeit" wird die Zeitspanne ab dem Mischen der Komponenten einer Epoxidharz-Zusammensetzung bis zu deren Gelieren bezeichnet.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen, sofern nicht anders angegeben.

Gewichtsprozente (Gewichts-%) bezeichnen Massenanteile eines Bestandteils einer Zusammensetzung bezogen auf die gesamte Zusammensetzung, falls nichts anderes angegeben ist. Die Begriffe "Masse" und "Gewicht" werden im vorliegenden Dokument synonym benutzt.

Das mindestens eine bei Raumtemperatur flüssige Amin **A1** wird im Folgenden auch als Amin **A1** bezeichnet.

Als Amin **A1** geeignet sind insbesondere 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), Isophorondiamin (IPDA), 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo[5.2.1.0^{2,6}]-decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, Diethylentriamin (DETA), Triethylentetramin (TETA), Tetraethylenpentamin (TEPA), Pentaethylenhexamin (PEHA), Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, 3-(2-Aminoethyl)aminopropyl-amin, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxa-dodecan-3,10-diamin, 4,7,10-Trioxatridecan-1,13-diamin, Polyoxyalkylendi- odertriamine, insbesondere Polyoxypropylendiamine oder Polyoxypropylentriamine wie Jeffamine^{®} D-230 (von Huntsman), 2,5-Bis(aminomethyl)furan, 2,5-Bis(aminomethyl)tetrahydrofuran, Bis(5-aminomethylfuran-2-yl)methan, Bis(5-aminomethyl-tetrahydrofuran-2-yl)methan, 2,2-Bis(5-aminomethylfuran-2-yl)propan oder 2,2-Bis(5-aminomethyltetrahydrofuran-2-yl)propan.

Bevorzugt ist das Amin **A1** ausgewählt aus der Gruppe bestehend aus 1,5-Diamino-2-methylpentan (MPMD), 2-Butyl-2-ethyl-1,5-pentandiamin (C11-Neodiamin), 2,2(4),4-Trimethyl-1,6-hexandiamin (TMD), Isophorondiamin (IPDA),1,2-Diaminocyclohexan, 1,3-Bis(aminomethyl)cyclohexan, Bis(4-aminocyclohexyl)methan, Bis(4-amino-3-methylcyclohexyl)methan, 2(4)-Methyl-1,3-diaminocyclohexan, 2,5(2,6)-Bis(aminomethyl)bicyclo[2.2.1]heptan (NBDA), 1,3-Bis(aminomethyl)-benzol (MXDA), 1,4-Bis(aminomethyl)benzol, 2,5-Bis(aminomethyl)furan, 2,5-Bis(aminomethyl)tetrahydrofuran, Bis(5-aminomethylfuran-2-yl)methan, Bis(5-aminomethyltetrahydrofuran-2-yl)methan, 2,2-Bis(5-aminomethylfuran-2-yl)propan und 2,2-Bis(5-aminomethyltetrahydrofuran-2-yl)propan.

Davon bevorzugt ist IPDA, 1,2-Diaminocyclohexan, 1,3-Bis(aminomethyl)cyclohexan, 2(4)-Methyl-1,3-diaminocyclohexan oder MXDA.

Am meisten bevorzugt als Amin **A1** ist Isophorondiamin (IPDA). IPDA ermöglicht erfindungsgemässe Härter mit besonders hoher Endhärte und besonders wenig Vergilbung.

Isophorondiamin (3-Aminomethyl-3,5,5-trimethylcyclohexylamin) ist ein cycloaliphatisches primäres Diamin, welches als Gemisch aus cis- und trans-Isomer vorliegt und kommerziell erhältlich ist, beispielsweise als Vestamin^{®} IPD (von Evonik).

In einer bevorzugten Ausführungsform der Erfindung ist Isophorondiamin hergestellt aus Aceton aus einer nachwachsenden Quelle. Dies ermöglicht besonders nachhaltige Härter für Epoxidharze.

In einer bevorzugten Ausführungsform enthält der Härter zusätzlich zum Amin **A1** Isophorondiamin mindestens ein weiteres Amin **A1,** insbesondere in einem Gewichtsverhältnis von Isophorondiamin zu weiterem Amin **A1** von 50/50 bis 90/10.

In einer bevorzugten Ausführungsform der Erfindung enhält der Härter als Amin **A1** Isophorondiamin und 1,3-Bis(aminomethyl)benzol, insbesondere in einem Gewichtsverhältnis von Isophorondiamin zu 1,3-Bis(aminomethyl)benzol von 50/50 bis 90/10, bevorzugt 60/40 bis 80/20. Ein solcher Härter ermöglicht eine besonders schnelle Aushärtung bei hoher Endhärte und wenig Vergilbung.

Der Härter enthält weiterhin mindestens eine Diphenolsäure der Formel (I), 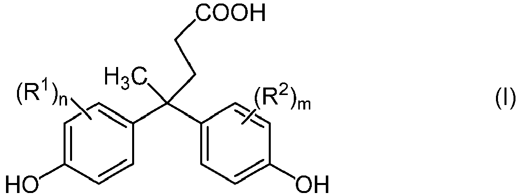 wobei
m und n unabhängig voneinander für 0, 1 oder 2 stehen, und
R¹ und R² unabhängig voneinander für einen Alkyl-, Alkenyl oder Alkoxyrest mit 1 bis 10 C-Atomen oder für Hydroxyl oder für einen linearen Kohlenwasserstoffrest mit 15 C-Atomen stehen.

Besonders bevorzugt stehen m und n beide für 0. Diese Diphenolsäure ist 4,4-Bis-(4-hydroxyphenyl)pentansäure. Sie ist besonders einfach zugänglich und ermöglicht schnell aushärtende Epoxidharz-Zusammensetzungen mit besonders guter Verarbeitbarkeit. Sie ist insbesondere erhältlich aus der Umsetzung von Phenol mit 4-Oxopentansäure (Lävulinsäure).

In einer bevorzugten Ausführungsform der Erfindung stehen m und n beide für 1 und R¹ und R² stehen für einen Rest ausgewählt aus der Gruppe bestehend aus Methyl, Methoxy, Ethyl, Ethoxy, Propyl, Isopropyl, Butyl, tert.Butyl, Pentyl, Allyl, Hydroxyl und linearen aliphatischen C₁₅H₂₅₋₃₁-Kohlenwasserstoffresten. Solche Diphenolsäuren sind insbesondere erhältlich aus der Umsetzung entsprechend substituierter Phenole mit 4-Oxopentansäure (= Lävulinsäure).

Ein mit linearen aliphatischen C₁₅H₂₅₋₃₁-Kohlenwasserstoffresten substituiertes Phenol ist insbesondere Cardanol. Cardanol ist ein nachwachsender Rohstoff und wird insbesondere gewonnen aus den Schalen von Cashewnüssen. Cardanol enthält mehrheitlich ein Gemisch aus in 3-Stellung mit einem linearen aliphatischen C₁₅H₂₅- oder C₁₅H₂₇- oder C₁₅H₂₉- oder C₁₅H₃₁-Kohlenwasserstoffrest substituierten Phenolen.

Besonders bevorzugte Diphenolsäuren der Formel (I) sind ausgewählt aus der Gruppe bestehend aus 4,4-Bis(4-hydroxyphenyl)pentansäure, 4,4-Bis(4-hydroxy-3-methylphenyl)pentansäure, 4,4-Bis(4-hydroxy-3-ethylphenyl)pentansäure, 4,4-Bis(4-hydroxy-3-isopropylphenyl)pentansäure, 4,4-Bis(4-hydroxy-3-butylphenyl)-pentansäure, 4,4-Bis(4-hydroxy-3-tert.butylphenyl)pentansäure, 4,4-Bis(4-hydroxy-3-pentylphenyl)pentansäure, 4,4-Bis(4-hydroxy-3-allylphenyl)pentansäure, 4,4-Bis-(4-hydroxy-3,5-dimethylphenyl)pentansäure, 4,4-Bis(4-hydroxy-3,5-diisopropylphenyl)pentansäure, 4,4-Bis(4-hydroxy-3,5-di-tert.butylphenyl)pentansäure, 4,4-Bis(4-hydroxy-3-methyl-5-isopropylphenyl)pentansäure, 4,4-Bis(4-hydroxy-2-methylphenyl)pentansäure, 4,4-Bis(4-hydroxy-2-ethylphenyl)pentansäure, 4,4-Bis(4-hydroxy-3-methoxyphenyl)pentansäure, 4,4-Bis(3,4-dihydroxyphenyl)-pentansäure, 4,4-Bis(2,4-dihydroxyphenyl)pentansäure und 4,4-Bis(4-hydroxy-2-(C₁₅H₂₅₋₃₁ linearer Kohlenwasserstoff)phenyl)pentansäuren.

Davon bevorzugt ist 4,4-Bis(4-hydroxyphenyl)pentansäure, 4,4-Bis(4-hydroxy-3-methylphenyl)pentansäure, 4,4-Bis(4-hydroxy-3-allylphenyl)pentansäure, 4,4-Bis(4-hydroxy-3-methoxyphenyl)pentansäure, 4,4-Bis(3,4-dihydroxyphenyl)-pentansäure oder 4,4-Bis(2,4-dihydroxyphenyl)pentansäure.

Am meisten bevorzugt ist 4,4-Bis(4-hydroxyphenyl)pentansäure.

Besonders bevorzugt ist der Einsatz einer Diphenolsäure, welche zumindest teilweise aus nachwachsenden Rohstoffen hergestellt wurde. Dies ermöglicht besonders nachhaltige Härter für Epoxidharze.

Bevorzugt liegt das Gewichtsverhältnis zwischen der Diphenolsäure der Formel (I) und dem Amin **A1** im Bereich von 0.025 bis 0.5, insbesondere 0.05 bis 0.25. Ein solcher Härter ist einfach herstellbar, niedrigviskos und ermöglicht eine gute Verarbeitbarkeit, eine schnelle Aushärtung und hohe Endhärten.

Bevorzugt enthält der Härter bezogen auf den gesamten Härter 1 bis 10 Gewichts-%, bevorzugt 2 bis 8 Gewichts-%, Diphenolsäure der Formel (I).

Zur Herstellung des Härters wird das Amin **A1** bevorzugt vorgelegt und aufgewärmt, insbesondere auf eine Temperatur im Bereich von 40 bis 80 °C, insbesondere 50 bis 70 °C, und anschliessend die Diphenolsäure langsam zugegeben und unter gutem Rühren gelöst.

Für den Fall, dass der Härter einen Verdünner enthält, erfolgt die Herstellung bevorzugt so, dass der Verdünner oder ein Gemisch aus Verdünner und Amin **A1** vorgelegt und aufgewärmt wird, insbesondere auf eine Temperatur im Bereich von 40 bis 80 °C, insbesondere 50 bis 70 °C, und anschliessend die Diphenolsäure langsam zugegeben und unter gutem Rühren gelöst wird.

Bevorzugt enthält der Härter mindestens einen Verdünner.

Geeignete Verdünner sind insbesondere n-Propanol, Isopropanol, n-Butanol, Isobutanol, tert.Butanol, 1-Pentanol, 2-Pentanol, 3-Pentanol, 2-Methyl-1-butanol, 3-Methyl-1-butanol, 3-Methyl-2-butanol, n-Hexanol, 2-Ethylhexanol, Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, 2,2,4-Trimethyl-1,3-pentandiolmonoisobutyrat, Diphenylmethan, Diisopropylnaphthalin, Isopropylbiphenyle, Erdölfraktionen wie zum Beispiel Solvesso^{®}-Typen (von Exxon), Alkylphenole wie tert.Butylphenol, Nonylphenol, Dodecylphenol, Cardanol, styrolisiertes Phenol, flüssige aromatische Kohlenwasserstoffharze, insbesondere Phenolgruppen-haltige Typen, alkoxyliertes Phenol, insbesondere ethoxyliertes oder propoxyliertes Phenol, Adipate, Sebacate, Phthalate, Benzoate, organische Phosphor- oder Sulfonsäureester oder Sulfonamide.

Davon bevorzugt sind aromatische Verdünner mit einem Siedepunkt von mehr als 200 °C.

Bevorzugt ist der Verdünner ausgewählt aus der Gruppe bestehend aus Benzylalkohol, styrolisiertem Phenol, ethoxyliertem Phenol wie insbesondere 2-Phenoxyethanol, ethoxyliertem Benzylalkohol wie insbesondere 2-Benzyloxyethanol, phenolgruppenhaltigen aromatischen Kohlenwasserstoffharzen wie insbesondere den Novares^{®}-Typen LS 500, LX 200, LA 300 oder LA 700 (von Rütgers), Diisopropylnaphthalin, Isopropylbiphenylen und Cardanol.

Am meisten bevorzugt ist Benzylalkohol.

Bevorzugt liegt der Verdünner in einer solchen Menge vor, dass das Gewichtsverhältnis zwischen Verdünner und Amin **A1** im Bereich von 0.15 bis 1.5, insbesondere 0.3 bis 1.2, liegt. Ein solcher Härter ermöglicht Epoxidharz-Beschichtungen mit besonders wenig Neigung zu Blushing-Effekten und somit besonders schönen Oberflächen.

Bevorzugt enthält der Härter bezogen auf den gesamten Härter 10 bis 60 Gewichts-%, insbesondere 20 bis 50 Gewichts-%, Verdünner.

Ein besonders bevorzugter Härter enthält bezogen auf den gesamten Härter
- 30 bis 80 Gewichts-% Amin **A1,**
- 1 bis 10 Gewichts-%, bevorzugt 2 bis 8 Gewichts-%, Diphenolsäure der Formel (I), und
- 10 bis 60 Gewichts-%, bevorzugt 20 bis 50 Gewichts-%, Verdünner.

In einer bevorzugten Ausführungsform enthält der Härter mindestens einen weiteren Beschleuniger, bei welchem es sich nicht um eine Diphenolsäure der Formel (I) handelt.

Geeignete weitere Beschleuniger sind insbesondere Nitrate wie insbesondere Calciumnitrat, Phenole, insbesondere Bisphenole, Phenol-Harze wie insbesondere Phenol-Formaldehyd-Harze, auch Novolake genannt, oder Mannich-Basen wie insbesondere 2-(Dimethylaminomethyl)phenol, 2,4,6-Tris(dimethylaminomethyl)-phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.

Bevorzugt sind Phenol-Formaldehyd-Harze, Calciumnitrat oder Mannich-Basen. Am meisten bevorzugt ist 2,4,6-Tris(dimethylaminomethyl)phenol.

Der Härter kann weitere, von Amin **A1** verschiedene Amine enthalten.

Geeignete solche weitere Amine sind insbesondere alkylierte Amine wie insbesondere N-Benzyl-1,2-ethandiamin, N-Benzyl-1,2-propandiamin, N-Benzyl-1,3-bis(aminomethyl)benzol, N-(2-Ethylhexyl)-1,3-bis(aminomethyl)benzol, N-Furfuryl-1,2-ethandiamin oder N-Tetrahydrofurfuryl-1,2-ethandiamin, weiterhin 3-Dimethylaminopropylamin (DMAPA), 3-(3-(Dimethylamino)propylamino)propylamin (DMAPAPA) oder N-Aminoethylpiperazin, höhermolekulare Polyoxypropylendiamine oder -triamine wie insbesondere Jeffamine^{®} D-400 oder Jeffamine^{®} T-403 (beide von Huntsman), Phenalkamine oder-amide, welche Umsetzungsprodukte von Cardanol mit Aldehyden, insbesondere Formaldehyd, und Polyaminen darstellen, bei Raumtemperatur feste Amine wie insbesondere 1,12-Dodecandiamin oder Bis(hexamethylen)triamin (BHMT), oder aminfunktionelle Addukte dieser Amine oder der genannten Amine **A1** mit Mono- oder Polyepoxiden, insbesondere aromatischen Epoxidharzen.

Besonders geeignete weitere Amine sind ausgewählt aus der Gruppe bestehend aus N-Benzyl-1,2-ethandiamin, aminfunktionellen Addukten von IPDA mit aromatischen Epoxidharzen, aminfunktionellen Addukten von MXDA mit aromatischen Epoxidharzen und aminfunktionellen Addukten von N-Benzyl-1,2-ethandiamin mit aromatischen Epoxidharzen. Bevorzugte aromatische Epoxidharze sind dabei Bisphenol A-Diglycidylether oder Bisphenol F-Diglycidylether.

Der Härter kann wasserbasiert sein und Wasser im Bereich von 15 bis 90 Gewichts-%, bevorzugt 20 bis 80 Gewichts-%, bezogen auf den gesamten Härter enthalten.

Der Härter ist bevorzugt nicht wasserbasiert. Er enthält bevorzugt weniger als 15 Gewichts-%, insbesondere weniger als 10 Gewichts-%, Wasser, bezogen auf den gesamten Härter. Ein solcher Härter ist besonders geeignet für nicht-wässrige Epoxidharz-Produkte.

In einer bevorzugten Ausführungsform enthält der Härter eine geringe Menge Wasser, insbesondere bezogen auf den gesamten Härter 0.5 bis 9 Gewichts-%, bevorzugt 1 bis 5 Gewichts-%, Wasser. Solche Härter ermöglichen besonders schöne Oberflächen.

Der Härter kann weitere Bestandteile enthalten, insbesondere
- weitere Addukte, insbesondere Addukte von 1,2-Ethandiamin oder 1,2-Propandiamin mit Kresylglycidylether oder aromatischen Epoxidharzen, bei welchen nicht umgesetztes 1,2-Ethandiamin oder 1,2-Propandiamin nach der Umsetzung destillativ entfernt wurde,
- Monoamine wie insbesondere Benzylamin oder Furfurylamin,
- Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten Polyamin, insbesondere DETA oder TETA,
- Mannich-Basen,
- aromatische Polyamine wie insbesondere 4,4'-, 2,4' und/oder 2,2'-Diaminodiphenylmethan, 2,4(6)-Toluoldiamin, 3,5-Dimethylthio-2,4(6)-toluoldiamin oder 3,5-Diethyl-2,4(6)-toluylendiamin,
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol,
- oberflächenaktive Additive, insbesondere Entschäumer, Entlüfter, Netzmittel, Dispergiermittel oder Verlaufsmittel, oder
- Stabilisatoren, insbesondere Stabilisatoren gegen Oxidation, Wärme, Licht oder UV-Strahlung.

Ein weiterer Gegenstand der Erfindung ist eine Epoxidharz-Zusammensetzung umfassend
- eine Harz-Komponente umfassend mindestens ein Epoxidharz und
- eine Härter-Komponente umfassend den vorgängig beschrieben Härter.

Ein geeignetes Epoxidharz wird auf bekannte Art und Weise erhalten, insbesondere aus der Reaktion von Epichlorhydrin mit Polyolen, Polyphenolen oder Aminen.

Geeignete Epoxidharze sind insbesondere aromatische Epoxidharze, insbesondere die Glycidylether von:
- Bisphenol A, Bisphenol F oder Bisphenol A/F, wobei A für Aceton und F für Formaldehyd steht, welche als Edukte zur Herstellung dieser Bisphenole dienten. Im Fall von Bisphenol F können auch Stellungsisomere vorhanden sein, insbesondere abgeleitet von 2,4'- oder 2,2'-Hydroxyphenylmethan;
- Dihydroxybenzol-Derivaten wie Resorcin, Hydrochinon oder Brenzcatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)-heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]-benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylenbis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.

Weitere geeignete Epoxidharze sind Epoxidharze aus der Umsetzung von biobasierten hydroxyfunktionellen Rohstoffen mit Epichlorhydrin, insbesondere von biobasiertem Glycerin abgeleitetem Epichlorhydrin. Besonders bevorzugt sind Vanillin-basierte Epoxidharze wie insbesondere Diglycidylether von Vanillinalkohol, sowie Glycerin-basierte Epoxidharze wie insbesondere Triglycidylether von biobasiertem Glycerin.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25 °C bezeichnet.

Gegebenenfalls enthält die Harz-Komponente zusätzlich Anteile von Epoxid-Festharz.

Das Epoxidharz ist insbesondere ein aromatisches Flüssigharz auf der Basis eines Bisphenols oder Novolaks, insbesondere mit einem mittleren Epoxid-Equivalentgewicht im Bereich von 156 bis 210 g/eq.

Besonders geeignet ist ein Bisphenol A-Diglycidylether und/oder Bisphenol F-Diglycidylether, wie sie kommerziell beispielsweise von Olin, Huntsman oder Momentive erhältlich sind. Diese Flüssigharze weisen eine für Epoxidharze niedrige Viskosität auf und ermöglichen eine schnelle Aushärtung und hohe Härten. Sie können Anteile von Bisphenol A-Festharz oder Novolak-Epoxidharzen enthalten.

Besonders bevorzugt ist weiterhin ein Bisphenol A-Diglycidylether aus der Umsetzung von Bisphenol A mit biobasiertem Epichlorhydrin. Dies ermöglicht besonders nachhaltige Epoxidharz-Zusammensetzungen.

Weiterhin besonders geeignet sind Phenol-Formaldehyd Novolak-Glycidylether, insbesondere mit einer mittleren Funktionalität im Bereich von 2.3 bis 4, bevorzugt 2.5 bis 3. Sie können Anteile von weiteren Epoxidharzen enthalten, insbesondere Bisphenol A-Diglycidylether oder Bisphenol F-Diglycidylether.

Weiterhin besonders geeignet sind Diglycidylether von Vanillinalkohol oder Triglycidylether von Glycerol, insbesondere Diglycidylether von Vanillinalkohol.

Besonders bevorzugt umfasst die Harz-Komponente mindestens ein Epoxidharz ausgewählt aus der Gruppe bestehend aus Bisphenol A-Diglycidylethern, Bisphenol F-Diglycidylethern, Phenol-Formaldehyd Novolak-Glycidylethern mit einer mittleren Funktionalität von 2.3 bis 4, bevorzugt 2.5 bis 3, Vanillinalkohol-Diglycidylethern und Kombinationen aus zwei oder mehr der genannten Epoxidharze.

Die Harz-Komponente enthält bevorzugt mindestens einen Epoxidgruppen-haltigen Reaktivverdünner.

Geeignete Reaktivverdünner sind insbesondere Butandioldiglycidylether, Hexandioldiglycidylether, Trimethylolpropandi- oder triglycidylether, Phenylglycidylether, Kresylglycidylether, Guaiacolglycidylether, 4-Methoxyphenylglycidylether, p-n-Butylphenylglycidylether, p-tert. Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether.

Bevorzugt enthält die Epoxidharz-Zusammensetzung mindestens einen weiteren Bestandteil ausgewählt aus oberflächenaktiven Additiven, Füllstoffen und Pigmenten.

Geeignete oberflächenaktive Additive sind insbesondere Entschäumer, Entlüfter, Netzmittel, Dispergiermittel, Verlaufsmittel und/oder dispergierte Paraffinwachse.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsiebe, Aluminiumoxid, Zinkoxid, Aluminium-dotiertes Zinkoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln. Davon bevorzugt sind Calciumcarbonat, Baryt, Quarzmehl, Talk, Aluminiumpulver oder eine Kombination davon.

Geeignete Pigment sind insbesondere Titandioxide, Eisenoxide, Chrom(III)oxide, organische Pigmente, Russ oder Korrosionsschutzpigmente, insbesondere Phosphate, Orthophosphate oder Polyphosphate, welche als Gegenion insbesondere Chrom, Zink, Aluminium, Kalzium, Strontium oder eine Kombination dieser Metalle enthalten. Besonders geeignet sind Titandioxide.

Gegebenenfalls enthält die Epoxidharz-Zusammensetzung weitere Hilfs- und Zusatzstoffe, insbesondere die Folgenden:
- weitere Reaktivverdünner, insbesondere epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen aufweisende Silikone,
- Lösemittel,
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine,
- Fasern, insbesondere Glasfasern, Kohlefasern, Metallfasern, Keramikfasern oder Kunststofffasern wie Polyamidfasern oder Polyethylenfasern,
- Nanofüllstoffe, insbesondere Carbon Nanotubes;
- Rheologie-Modifizierer, insbesondere Verdicker oder Antiabsetzmittel,
- Haftverbesserer, insbesondere Organoalkoxysilane,
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine, oder
- Stabilisatoren gegen Oxidation, Wärme, Licht oder UV-Strahlung oder Biozide.

Bevorzugt enthält die Epoxidharz-Zusammensetzung weniger als 5 Gewichts-% Wasser. Eine solche, nicht-wasserbasierte Epoxidharz-Zusammensetzung ist besonders vielseitig verwendbar und besonders wasserbeständig.

Die Harz- und die Härter-Komponente der Epoxidharz-Zusammensetzung werden in voneinander getrennten Gebinden gelagert.

Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die Harz- und die Härter-Komponente werden kurz vor oder während der Applikation vermischt. Das Mischungsverhältnis wird bevorzugt so gewählt, dass das molare Verhältnis der gegenüber Epoxidgruppen reaktiven Gruppen zu den Epoxidgruppen im Bereich von 0.5 bis 1.5, insbesondere 0.7 bis 1.2, liegt. In Gewichtsteilen liegt das Mischungsverhältnis zwischen der Harz- und der Härter-Komponente typischerweise im Bereich von 1:2 bis 20:1.

Das Mischen der Komponenten erfolgt kontinuierlich oder batchweise mittels eines geeigneten Verfahrens, wobei darauf zu achten ist, dass zwischen dem Mischen der Komponenten und der Applikation nicht zu viel Zeit vergeht und die Applikation innerhalb der Topfzeit erfolgt. Das Mischen und die Applikation können bei Umgebungstemperatur erfolgen, welche typischerweise im Bereich von etwa 5 bis 40°C, bevorzugt bei etwa 10 bis 35°C, liegt.

Mit dem Mischen der Komponenten beginnt die Aushärtung der Epoxidharz-Zusammensetzung durch chemische Reaktion. Primäre und sekundäre Aminogruppen und gegebenenfalls vorhandene weitere gegenüber Epoxidgruppen reaktive Gruppen reagieren mit den Epoxidgruppen unter deren Ringöffnung. Als Ergebnis hauptsächlich dieser Reaktionen polymerisiert die Zusammensetzung und härtet dadurch aus.

Die Aushärtung erstreckt sich typischerweise über einige Stunden bis Tage. Die Dauer hängt unter anderem von der Temperatur, der Reaktivität der Bestandteile, deren Stöchiometrie, der Art und Menge der Diphenolsäure der Formel (I) und gegebenenfalls vorhandenen weiteren Aminen und/oder Beschleunigern ab.

Im frisch vermischten Zustand hat die Epoxidharz-Zusammensetzung eine niedrige Viskosität. Bevorzugt liegt die Viskosität 5 Minuten nach dem Mischen der Harz- und der Härter-Komponente bei 20 °C im Bereich von 0.1 bis 10 Pa s, bevorzugt 0.2 bis 5 Pa·s, besonders bevorzugt 0.3 bis 2 Pa·s, gemessen mittels Kegel-Platten Viskosimeter bei einer Schergeschwindigkeit von 10 s⁻¹.

Die Applikation der Epoxidharz-Zusammensetzung erfolgt bevorzugt auf mindestens ein Substrat.

Als Substrat geeignet sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke, insbesondere beschichtete Böden, welche mit einer weiteren Bodenbelagsschicht überschichtet werden.

Die Substrate können bei Bedarf vor dem Applizieren vorbehandelt werden, insbesondere durch physikalische und/oder chemische Reinigungsverfahren oder das Aufbringen eines Aktivators oder eines Primers.

Die Substrate werden insbesondere beschichtet und/oder verklebt.

Ein weiterer Gegenstand der Erfindung ist eine ausgehärtete Zusammensetzung erhalten aus der beschriebenen Epoxidharz-Zusammensetzung nach dem Vermischen der Harz- und der Härter-Komponente.

Die Zusammensetzung wird bevorzugt verwendet als Beschichtung, Primer, Klebstoff, Dichtstoff, Vergussmasse, Giessharz oder Imprägnierharz. Besonders bevorzugt wird die Zusammensetzung als Beschichtung verwendet.

Aus der Verwendung entsteht ein Artikel enthaltend die ausgehärtete Zusammensetzung aus der beschriebenen Epoxidharz-Zusammensetzung.

Der Artikel ist insbesondere eine Bodenbeschichtung, Wandbeschichtung, Bauteilbeschichtung, Rohrbeschichtung, Dachbeschichtung oder eine Korrosionsschutzbeschichtung, oder ein verklebter Artikel.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Verwendete Substanzen und Abkürzungen

| | |
|---|---|
| Araldite^{®} GY 250 | Bisphenol A-Diglycidylether, EEW ca. 187 g/eq (von Huntsman) |
| Araldite^{®} DY-E | Monoglycidylether von C₁₂- bis C₁₄-Alkoholen, EEW ca. 290 g/eq (von Huntsman) |
| IPDA | 3-Aminomethyl-3,5,5-trimethylcyclohexylamin, AHEW 42.6 g/eq (Vestamin^{®} IPD, von Evonik) |
| MXDA | 1,3-Bis(aminomethyl)benzol, AHEW 34 g/Eq (von Mitsubishi Gas Chemical) |
| BAC | 1,3-Bis(aminomethyl)cyclohexan, AHEW 35.5 g/Eq (von Mitsubishi Gas Chemical) |
| TMD | 2,2(4),4-Trimethyl-1,6-hexandiamin, AHEW 39.6 g/Eq (Vestamin^{®} TMD, von Evonik) |
| Diphenolsäure-1 K54 | 4,4-Bis(4-hydroxyphenyl)pentansäure 2,4,6-Tris(dimethylaminomethyl)phenol (Ancamine^{®} K54, von Evonik) |

### Herstellung von Härtern für Epoxidharze:

### Härter H-1 bis H-13:

Für jeden Härter wurde die in Tabelle 1 angegebene Menge (in Gewichtsteilen) Benzylalkohol vorgelegt, auf 60 °C aufgewärmt und unter gutem Rühren die angegebene Menge Diphenolsäure - bzw. Salicylsaäure im Fall von Härter **H-12 (Ref.)** - darin gelöst. Dann wurde die Lösung abgekühlt und die in Tabelle 1 angegebenen weiteren Inhaltsstoffe in den angegebenen Mengen zugegeben, gut vermischt und der Härter unter Ausschluss von Feuchtigkeit aufbewahrt. Für den Härter **H-13 (Ref.)** wurden die in Tabelle 1 angegebenen Mengen IPDA und Benzylalkohol bei Raumtemperatur vermischt und der Härter unter Ausschluss von Feuchtigkeit aufbewahrt.

Von jedem Härter wurde die Viskosität bei 20 °C auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate von 10 s⁻¹) gemessen und der Aspekt des Härters optisch beurteilt.

Die in Tabelle 1 mit **"(Ref.)"** bezeichneten Härter sind nicht erfindungsgemässe Vergleichsbeispiele.

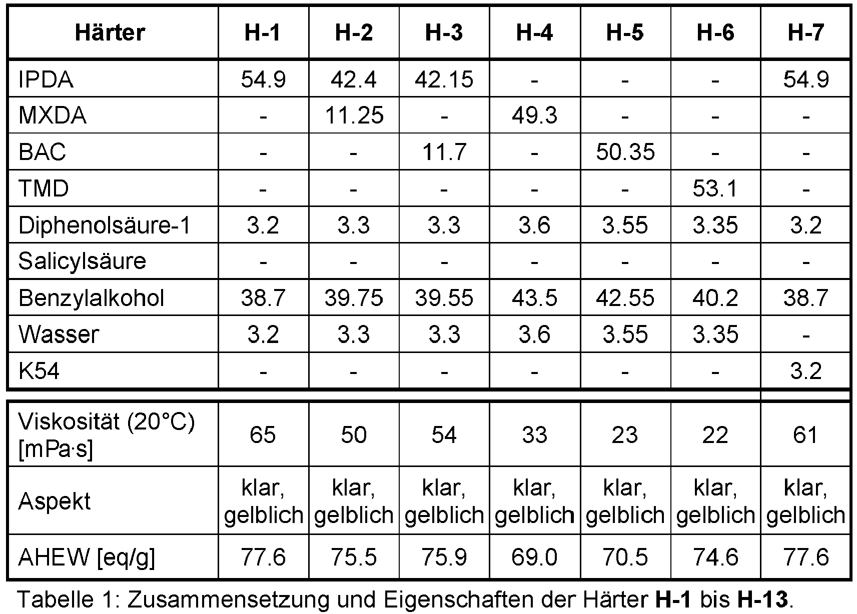

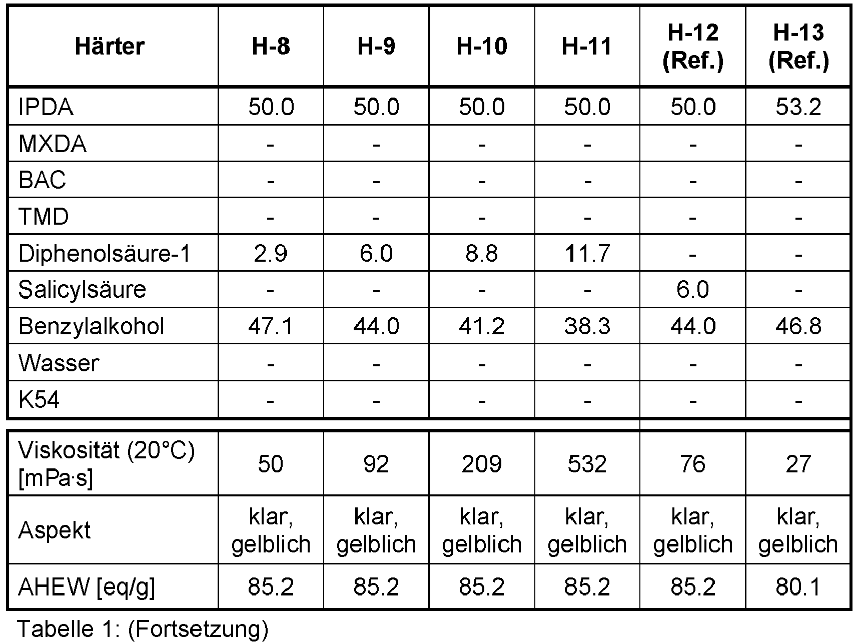

### Herstellung von Epoxidharz-Zusammensetzungen

### Zusammensetzungen Z-1 bis Z-13:

Für jede Zusammensetzung wurden die in den Tabellen 2 und 3 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.

Anschliessend wurden die in den Tabellen 2 und 3 angegebenen Härter in der jeweils angegebenen Mengen (in Gewichtsteilen) mittels des Zentrifugalmischers mit der Harz-Komponente vermischt und die vermischte Zusammensetzung unverzüglich folgendermassen geprüft:
Die **Viskosität (5')** wurde 5 min nach dem Vermischen der Harz-Komponente und dem Härter bei einer Temperatur von 20 °C auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate von 10 s⁻¹) gemessen.

Die **Gelierzeit** wurde bestimmt, indem eine frisch vermischte Menge von ca. 3 g im Normklima mit einem Spatel in regelmässigen Abständen bewegt wurde, bis die Masse gelierte.

Die **Shore D** Härte wurde bestimmt nach DIN 53505 an zwei zylindrischen Prüfkörpern (Durchmesser 20 mm, Dicke 5 mm), wobei einer im Normklima und einer bei 8 °C und 80% relativer Feuchtigkeit gelagert und die Härte jeweils nach 1 Tag (24h), nach 2 Tagen und teilweise auch nach 3 Tagen gemessen wurde. Weiterhin wurde ein Film in einer Schichtdicke von 500 µm auf eine Glasplatte aufgezogen und dieser im Normklima gelagert bzw. ausgehärtet. An diesem Film wurde die **Königshärte** (Pendelhärte nach König nach DIN EN ISO 1522) nach 1 Tag, 2 Tagen, 7 Tagen und nach 14 Tagen bestimmt **(1d NK), (2d NK), (7d NK), (14d NK).** Nach 14 Tagen wurde der **Aspekt (NK)** des Films beurteilt. Als "schön" wurde ein klarer Film bezeichnet, welcher eine glänzende und nichtklebrige Oberfläche ohne Struktur aufwies. Als "Struktur" wurde jegliche Art von Zeichnung oder Muster auf der Oberfläche bezeichnet.

Ein weiterer Film wurde in einer Schichtdicke von 500 µm auf eine Glasplatte aufgezogen und dieser unmittelbar nach dem Applizieren während 7 Tagen bei 8 °C und 80% relativer Feuchtigkeit und anschliessend während 2 Wochen im Normklima gelagert, beziehungsweise ausgehärtet. 24 Stunden nach der Applikation wurde ein Flaschendeckel aus Polypropylen auf den Film aufgesetzt, unter welchem ein feuchter Schwamm platziert war. Nach weiteren 24 Stunden wurden der Schwamm und der Deckel entfernt und an einer neuen Stelle des Films platziert, wo sie nach 24 Stunden wieder entfernt und neu platziert wurden, insgesamt 4 mal. Anschliessend wurde der Aspekt dieses Films beurteilt (in den Tabellen mit **"Aspekt (8°/80%)"** bezeichnet), auf die gleiche Weise wie für den Aspekt (NK) beschrieben. Dabei wurde jeweils auch die Anzahl und Art der sichtbaren Marken angegeben, die im Film durch den feuchten Schwamm oder den aufgesetzten Deckel entstanden waren. Als "Blushing" wurde die Anzahl weiss verfärbte Flecken angegeben. Mit "kein" wurde eine Oberfläche ohne weiss verfärbte Flecken bezeichnet. Mit "1" wurde ein deutlich weiss verfärbter Fleck und mit "(1)" ein schwach weiss verfärbter Fleck bezeichnet. Als "Ring" wurde angegeben, wie viele ringförmige Abdrucke durch das Einsinken der aufgesetzten Deckel vorhanden waren. Als "1" wurde ein deutlicher Abdruck und mit "(1)" ein schwacher Abdruck des Deckels bezeichnet. (Ein ringförmiger Abdruck zeigt an, dass die Beschichtung noch nicht begehbar ist.). An den so ausgehärteten Filmen wurde wiederum die Königshärte bestimmt, jeweils nach 7 Tagen bei 8 °C und 80% relativer Feuchtigkeit **(Königsh. (7d 8°/80%)),** dann nach weiteren 2 Tagen im NK **(Königsh. (+2d NK)**) bzw. 7 Tagen im NK **(Königsh. (+7d NK)**) bzw. 14d im NK **(Königsh. (+14d NK)**).

Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet **(Q-Sun (72h)).** Anschliessend wurde der Farbunterschied ΔE des so belasteten Films im Vergleich zum entsprechenden nicht belasteten Film mittels einem Colorimeter NH310 von Shenzen 3NH Technology Co. LTD, ausgerüstet mit Silicon Photoelectric Diode Detector, Light Source A, Color Space Measurement Interface CIE L*a*b*C*H*, bestimmt. ΔE-Werte von mehr als 10 stehen für eine deutliche Vergilbung.

Die Resultate sind in den Tabellen 2 und 3 angegeben.

Die mit **"(Ref.)"** bezeichneten Zusamensetzungen sind nicht erfindungsgemässe Vergleichsbeispiele.

**Tabelle 2: Zusammensetzung und Eigenschaften von Z-1 bis Z-7.**

| **Zusammensetzung** | | **Z-1** | **Z-2** | **Z-3** | **Z-4** | **Z-5** | **Z-6** | **Z-7** |
|---|---|---|---|---|---|---|---|---|
| **Harz-Komponente:** | | | | | | | | |
| Araldite^{®} GY-250 | | 167.2 | 167.2 | 167.2 | 167.2 | 167.2 | 167.2 | 167.2 |
| Araldite^{®} DY-E | | 31.8 | 31.8 | 31.8 | 31.8 | 31.8 | 31.8 | 31.8 |
| **Härter:** | | **H-1** | **H-2** | **H-3** | **H-4** | **H-5** | **H-6** | **H-7** |
| | | 77.6 | 75.5 | 75.9 | 69.0 | 70.5 | 74.6 | 77.6 |
| Viskosität (5') [mPa·s] | | 0.63 | 0.58 | 0.62 | 0.44 | 0.77 | 0.54 | 0.66 |
| Gelierzeit (h:min) | | 4 h | 3:15 | 3:15 | 2:25 | 1:45 | 2:40 | > 3h |
| Shore D | (1d NK) | 63 | 60 | 67 | 72 | 75 | 40 | 71 |
| | (2d NK) | 75 | 70 | 76 | 73 | 77 | 53 | 79 |
| Shore D | (1d 8°/80%) | n.m.¹ | 20 | 13 | 62 | 65 | 28 | n.m.¹ |
| | (2d 8°/80%) | 58 | 67 | 64 | 74 | 72 | 58 | 57 |
| | (3d 8°/80%) | 70 | 68 | n.b. | n.b. | n.b. | n.b. | 68 |
| Königshärte [s] | (1d NK) | 48 | 55 | 41 | 21 | 25 | 7 | 53 |
| | (2d NK) | 104 | 112 | 88 | 28 | 39 | 13 | 112 |
| | (7d NK) | 150 | 161 | 126 | 48 | 43 | 62 | 150 |
| | (14d NK) | 157 | 165 | 140 | 48 | 53 | 112 | 160 |
| Aspekt (NK) | | schön | schön | schön | schön | schön | schön | schön |
| Q-Sun (72h) ΔE | | 5.6 | 5.5 | 5.1 | 12.0 | 10.1 | 9.6 | 14.9 |
| Königsh. [s] | (7d 8°/80%) | 36 | 34 | 21 | 7 | 11 | 7 | 50 |
| | (+2d NK) | 115 | 92 | 45 | 7 | 13 | 24 | 95 |
| | (+7d NK) | 126 | 112 | 52 | 8 | 15 | 50 | 113 |
| | (+14d NK) | 135 | 121 | 62 | 10 | 15 | 99 | 122 |
| Aspekt (8°/80%) | | schön | schön | schön | trüb | schön | trüb | schön |
| Blushing | | (1) | (1) | 1 | 4 | 2 | 1 | (1) |
| Ring | | 1 | (1) | 1 | kein | kein | (1) | 1 |

| | | | | | | | | |
|---|---|---|---|---|---|---|---|---|
| ¹ nicht messbar (zu weich) "n.b." steht für "nicht bestimmt" | | | | | | | | |

**Tabelle 3: Zusammensetzung und Eigenschaften von Z-8 bis Z-13.**

| **Zusammensetzung** | | **Z-8** | **Z-9** | **Z-10** | **Z-11** | **Z-12 (Ref.)** | **Z-13 (Ref.)** |
|---|---|---|---|---|---|---|---|
| **Harz-Komponente:** | | | | | | | |
| Araldite^{®} GY-250 | | 167.2 | 167.2 | 167.2 | 167.2 | 167.2 | 167.2 |
| Araldite^{®} DY-E | | 31.8 | 31.8 | 31.8 | 31.8 | 31.8 | 31.8 |
| **Härter:** | | **H-8** | **H-9** | **H-10** | **H-11** | **H-12** | **H-13** |
| | | 85.2 | 85.2 | 85.2 | 85.2 | 85.2 | 80.1 |
| Viskosität (5') [mPa·s] | | 0.55 | 0.95 | 1.41 | 2.66 | 0.55 | 0.26 |
| Gelierzeit (h:min) | | 3:30 | 3:00 | > 1:45 | > 1:45 | 4:10 | > 4:00 |
| Shore D | (1d NK) | 49 | 57 | 50 | 54 | 44 | 30 |
| | (2d NK) | 67 | 71 | 70 | 66 | 61 | 60 |
| Shore D | (1d 8°/80%) | n.m.¹ | n.m.¹ | n.m.¹ | n.m.¹ | n.m.¹ | n.m.¹ |
| | (2d 8°/80%) | 41 | 47 | 40 | 48 | 39 | 6 |
| | (3d 8°/80%) | 62 | 64 | 61 | 67 | 45 | 44 |
| Königshärte [s] | (1d NK) | 22 | 25 | 24 | 27 | 13 | 11 |
| | (2d NK) | 88 | 86 | 126 | 88 | 53 | 60 |
| | (7d NK) | 151 | 137 | 130 | 115 | 125 | 130 |
| | (14d NK) | 160 | 154 | 134 | 118 | 132 | 132 |
| Aspekt (NK) | | schön | schön | schön | schön | schön | schön |
| Q-Sun (72h) ΔE | | 4.7 | 4.8 | 6.0 | 6.3 | 16.1 | 7.5 |
| Königsh. [s] | (7d 8°/80%) | 37 | 36 | 29 | 28 | 24 | 21 |
| | (+2d NK) | 101 | 98 | 88 | 70 | 69 | 84 |
| | (+7d NK) | 127 | 125 | 90 | 84 | 113 | 120 |
| | (+14d NK) | 139 | 136 | 99 | 95 | 125 | 133 |
| Aspekt (8°/80%) | | schön | schön | schön | schön | schön | schön |
| Blushing | | (1) | (1) | (1) | 1 | (1) | (1) |
| Ring | | 1 | 1 | 1 | 1 | 1 | 1 |

| | | | | | | | |
|---|---|---|---|---|---|---|---|
| ¹ nicht messbar (zu weich) | | | | | | | |

## Patentansprüche

1. Härter für Epoxidharze umfassend
- mindestens ein bei Raumtemperatur flüssiges Amin **A1** mit 6 bis 15 C-Atomen und zwei primären Aminogruppen,
- mindestens eine Diphenolsäure der Formel (I), 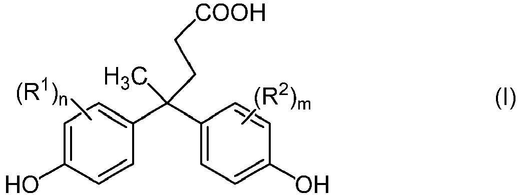 wobei
m und n unabhängig voneinander für 0, 1 oder 2 stehen, und
R¹ und R² unabhängig voneinander für einen Alkyl-, Alkenyl oder Alkoxyrest mit 1 bis 10 C-Atomen oder für Hydroxyl oder für einen linearen Kohlenwasserstoffrest mit 15 C-Atomen stehen,
- und gegebenenfalls mindestens einen Verdünner.

2. Härter gemäss Anspruch 1, **dadurch gekennzeichnet, dass** das Amin **A1** ausgewählt ist aus der Gruppe bestehend aus 1,5-Diamino-2-methylpentan, 2-Butyl-2-ethyl-1,5-pentandiamin, 2,2(4),4-Trimethyl-1,6-hexandiamin, Isophorondiamin,1,2-Diaminocyclohexan, 1,3-Bis(aminomethyl)cyclohexan, Bis(4-aminocyclohexyl)methan, Bis(4-amino-3-methylcyclohexyl)methan, 2(4)-Methyl-1,3-diaminocyclohexan, 2,5(2,6)-Bis(aminomethyl)bicyclo-[2.2.1]heptan, 1,3-Bis(aminomethyl)benzol, 1,4-Bis(aminomethyl)benzol, 2,5-Bis(aminomethyl)furan, 2,5-Bis(aminomethyl)tetrahydrofuran, Bis(5-amino-methylfuran-2-yl)methan, Bis(5-aminomethyltetrahydrofuran-2-yl)methan, 2,2-Bis(5-aminomethylfuran-2-yl)propan und 2,2-Bis(5-aminomethyltetrahydrofuran-2-yl)propan.

3. Härter gemäss einem der Ansprüche 1 oder 2, **dadurch gekennzeichnet, dass** als Amin **A1** Isophorondiamin enthalten ist.

4. Härter gemäss einem der Ansprüche 1 bis 3, **dadurch gekennzeichnet, dass** als Amin **A1** Isophorondiamin und 1,3-Bis(aminomethyl)benzol enthalten sind, insbesondere in einem Gewichtsverhältnis von Isophorondiamin zu 1,3-Bis(aminomethyl)benzol von 50/50 bis 90/10, bevorzugt 60/40 bis 80/20.

5. Härter gemäss einem der Ansprüche 1 bis 4, **dadurch gekennzeichnet, dass** m und n beide für 0 stehen.

6. Härter gemäss einem der Ansprüche 1 bis 4, **dadurch gekennzeichnet, dass** m und n beide für 1 stehen und R¹ und R² für einen Rest ausgewählt aus der Gruppe bestehend aus Methyl, Methoxy, Ethyl, Ethoxy, Propyl, Isopropyl, Butyl, tert.Butyl, Pentyl, Allyl, Hydroxyl und linearen aliphatischen C₁₅H₂₅₋₃₁-Kohlenwasserstoffresten stehen.

7. Härter gemäss einem der Ansprüche 1 bis 6, **dadurch gekennzeichnet, dass** das Gewichtsverhältnis zwischen der Diphenolsäure der Formel (I) und dem Amin **A1** im Bereich von 0.025 bis 0.5, bevorzugt 0.05 bis 0.25, liegt.

8. Härter gemäss einem der Ansprüche 1 bis 7, **dadurch gekennzeichnet, dass** mindestens ein Verdünner enthalten ist, insbesondere ausgewählt aus der Gruppe bestehend aus Benzylalkohol, styrolisiertem Phenol, ethoxyliertem Phenol, ethoxyliertem Benzylalkohol, phenolgruppenhaltigen aromatischen Kohlenwasserstoffharzen, Diisopropylnaphthalin, Isopropylbiphenylen und Cardanol.

9. Härter gemäss Anspruch 8, **dadurch gekennzeichnet, dass** das Gewichtsverhältnis zwischen dem Verdünner und dem Amin **A1** im Bereich von 0.15 bis 1.5, bevorzugt 0.3 bis 1.2, liegt.

10. Härter gemäss Anspruch 8, **dadurch gekennzeichnet, dass** bezogen auf den gesamten Härter
- 30 bis 80 Gewichts-% Amin **A1,**
- 1 bis 10 Gewichts-% Diphenolsäure der Formel (I), und
- 10 bis 60 Gewichts-% Verdünner
enthalten sind.

11. Härter gemäss einem der Ansprüche 1 bis 10, **dadurch gekennzeichnet, dass** bezogen auf den gesamten Härter 0.5 bis 9 Gewichts-%, bevorzugt 1 bis 5 Gewichts-%, Wasser enthalten sind.

12. Epoxidharz-Zusammensetzung umfassend
- eine Harz-Komponente umfassend mindestens ein Epoxidharz und
- eine Härter-Komponente umfassend den Härter gemäss einem der Ansprüche 1 bis 11.

13. Epoxidharz-Zusammensetzung gemäss einem der Ansprüche 11 oder 12, **dadurch gekennzeichnet, dass** mindestens ein weiterer Bestandteil ausgewählt aus oberflächenaktiven Additiven, Füllstoffen und Pigmenten enthalten ist.

14. Ausgehärtete Zusammensetzung erhalten aus der Epoxidharz-Zusammensetzung gemäss einem der Ansprüche 11 bis 13 nach dem Vermischen der Harz- und der Härter-Komponente.

15. Verwendung der Zusammensetzung gemäss einem der Ansprüche 11 bis 14 als Beschichtung, Primer, Klebstoff, Dichtstoff, Vergussmasse, Giessharz oder Imprägnierharz.
